(19) Europäisches Patentamt
European Patent Office
Office européen des brevets

(11) **EP 3 318 538 B1**

(12) **EUROPÄISCHE PATENTSCHRIFT**

(45) Veröffentlichungstag und Bekanntmachung des Hinweises auf die Patenterteilung:
**21.08.2019 Patentblatt 2019/34**

(51) Int Cl.:
**C04B 26/02** *(2006.01)* **C04B 26/04** *(2006.01)*
**C04B 26/06** *(2006.01)* **C04B 28/02** *(2006.01)*
**C04B 28/04** *(2006.01)* **C04B 28/06** *(2006.01)*

(21) Anmeldenummer: **16196844.1**

(22) Anmeldetag: **02.11.2016**

(54) **PUTZMASSE, WÄRMEDÄMMVERBUNDSYSTEM SOWIE VERFAHREN ZUR HERSTELLUNG EINES WÄRMEDÄMMVERBUNDSYSTEMS**

PLASTER MASS, HEAT INSULATION COMPOUND SYSTEM AND METHOD FOR MANUFACTURING SAME

CRÉPI, SYSTÈME COMPOSITE ISOLANT ET PROCÉDÉ DE FABRICATION D'UN SYSTÈME COMPOSITE ISOLANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.05.2018 Patentblatt 2018/19**

(73) Patentinhaber: **STO SE & Co. KGaA**
**79780 Stühlingen (DE)**

(72) Erfinder:
• **Tritschler, Kevin**
**77859 Schluchsee (DE)**
• **Rosenfelder, Dominik**
**78183 Hüfingen / Mundelfingen (DE)**
• **Burgeth, Gerald**
**79787 Lauchringen (DE)**
• **Hitzler, Martin**
**78244 Gottmadingen (DE)**

(74) Vertreter: **Gottschalk, Matthias**
**Gottschalk Maiwald**
**Patentanwalts- und Rechtsanwalts- (Schweiz) GmbH**
**Splügenstrasse 8**
**8002 Zürich (CH)**

(56) Entgegenhaltungen:
**EP-A1- 0 417 418      EP-A1- 0 652 187**
**EP-A2- 2 696 006**

EP 3 318 538 B1

**Beschreibung**

Die Erfindung betrifft eine Putzmasse zur Herstellung eines ein- oder mehrlagigen Unterputzes. Ein aus der Putzmasse hergestellter Unterputz bildet vorzugsweise eine Putzschicht in einem Wärmedämmverbundsystem aus. Folglich betrifft die Erfindung ferner ein Wärmedämmverbundsystem mit einem Unterputz, der aus einer erfindungsgemäßen Putzmasse hergestellt worden ist. Darüber hinaus wird ein Verfahren zur Herstellung eines Wärmedämmverbundsystems unter Verwendung der erfindungsgemäßen Putzmasse vorgeschlagen.

Stand der Technik

Ein Wärmedämmverbundsystem umfasst in der Regel mehrere plattenförmige Wärmedämmelemente, die zur Ausbildung einer Wärmedämmschicht an einem bauseitigen Untergrund befestigt werden. Auf die Wärmedämmschicht wird anschließend ein Putzaufbau aufgebracht, der üblicherweise einen ein- oder mehrlagigen Unterputz sowie einen Oberputz umfasst. Durch Einlegen eines Gewebes kann der Unterputz armiert werden, um der Bildung spannungsbedingter Risse entgegenzuwirken. Auf den Unterputz folgt der Oberputz als abschließende Deckschicht. Bei Bedarf kann der Oberputz mit einem Farbanstrich versehen werden.

Aus der EP 0 652 187 A1 geht beispielhaft ein Putzmörtel hervor, der eine hohe Wärmedämmfähigkeit besitzt. Aus der EP 0 417 418 A1 ist ein Werktrockenmörtel zur Herstellung von Putzen, insbesondere von Außenputzen bekannt, der einlagig verarbeitbar ist. Eine Wärmedämmplatte für ein Wärmedämmverbundsystem ist beispielsweise in der EP 2 696 006 A2 offenbart.

Derartige Wärmedämmverbundsysteme weisen den Nachteil auf, dass der außenliegende, vergleichsweise dünne Putzaufbau bei niedrigen Außentemperaturen, insbesondere nachts, stark auskühlt. In der Luft enthaltene Feuchtigkeit kann sich dann als Tauwasser an der Putzoberfläche niederschlagen. Bleibt die Putzoberfläche über einen längeren Zeitraum feucht, bildet sie einen hervorragenden Nährboden für Mikroorganismen, wie Algen, Pilze und dergleichen, aus. Die Besiedlung einer Putzoberfläche mit Mikroorganismen zeigt sich in unansehnlichen dunklen Verfärbungen.

Um dem entgegenzuwirken, können Putzmassen mit Bioziden ausgerüstet werden. Diese sind jedoch toxisch und belasten die Umwelt, insbesondere, wenn sie durch Regen ausgewaschen werden und ins Grundwasser gelangen.

Ferner kann die oberste Putzschicht eines Wärmedämmverbundsystems mit einer Beschichtung versehen werden, die hydrophobe Eigenschaften besitzt, so dass Tauwasser von der Oberfläche abgleitet bzw. abperlt und die Oberfläche schneller trocknet. Eine derartige Beschichtung ist beispielsweise aus der EP 2 883 918 A1 bekannt.

Darüber hinaus sind Maßnahmen bekannt, die verhindern sollen, dass sich überhaupt Tauwasser an der Putzoberfläche eines Wärmedämmverbundsystems niederschlägt. Zu diesen Maßnahmen zählt die aktive Beheizung einer Fassade, um ein Unterschreiten des Taupunkts zu verhindern. Die Umsetzung ist jedoch aufwendig und daher sehr kostenintensiv.

Alternativ wird in der Offenlegungsschrift DE 102 12 580 A1 ein Dämmsystem mit einer Wärmedämmschicht und einer hierauf angeordneten Außenschicht sowie einem latentwärmespeichernden Material vorgeschlagen, das in die Wärmedämmschicht oder in die Außenschicht eingebracht ist, um den Nachteil der geringen Wärmespeicherfähigkeit des Dämmsystems auszugleichen.

Taupunktunterschreitungen sollen auf diese Weise verhindert und der Tauwasserausfall soll gemindert werden, so dass in der Folge mikrobielles Wachstum vermieden wird.

Als Nachteil erweist sich bei der Verwendung latentwärmespeichernder Materialien jedoch, dass diese Materialien vergleichsweise teuer sind. Darüber hinaus ist die Einarbeitung derartiger Materialien in eine Wärmedämmschicht oder in eine Putzmasse zur Ausbildung einer auf einer Wärmedämmschicht angeordneten Außenschicht oftmals problematisch. Da vorrangig wachsartige Materialien, die eine gewisse Klebrigkeit aufweisen, als Latentwärmespeicher eingesetzt werden, besteht zudem die Gefahr, dass verstärkt Schmutzpartikel an der Fassadenoberfläche haften bleiben. Die insbesondere wachsartigen Materialien sind darüber hinaus leicht entzündlich.

Ausgehend von dem vorstehend genannten Stand der Technik liegt der vorliegenden Erfindung die Aufgabe zugrunde, den mikrobiellen Bewuchs auf Putzoberflächen von Wärmedämmverbundsystemen mit möglichst einfachen und kostengünstigen Mitteln zu verringern.

Zur Lösung der Aufgabe werden die Putzmasse mit den Merkmalen des Anspruchs 1 sowie das Wärmedämmverbundsystem mit den Merkmalen des Anspruchs 9 angegeben. Ferner wird ein Verfahren zur Herstellung eines

Wärmedämmverbundsystems vorgeschlagen. Vorteilhafte Ausführungsformen der Erfindung sind den jeweiligen Unteransprüchen zu entnehmen.

Offenbarung der Erfindung

Die zur Ausbildung eines ein- oder mehrlagigen Unterputzes vorgeschlagene Putzmasse umfasst ein organisches und/oder anorganisches Bindemittel, einen Füllstoff und ein Additiv. Dabei sind 1 bis 25 Gew.% Bindemittel, 2 bis 25 Gew.% mindestens ein wasserhaltiger und/oder hydratischer Füllstoff, der mindestens 30 Gew.-%, vorzugsweise mindestens 40 Gew.-%, weiterhin vorzugsweise mindestens 50 Gew.-% Wasser und/oder Hydrat bezogen auf das Gesamtgewicht des Füllstoffs enthält, 2 bis 15 Gew.% mindestens ein wärmeleitendes Additiv aus einem Material mit einer Wärmeleitfähigkeit $\lambda > 40$ W/(m*K), vorzugsweise $\lambda > 60$ W/(m*K), weiterhin vorzugsweise $\lambda > 80$ W/(m*K), 40 bis 80 Gew.% weitere Füllstoffe, 0 bis 10 Gew.% weitere Additive und 10 bis 40 Gew.% Wasser enthalten.

Der in der Putzmasse enthaltene wasserhaltige und/oder hydratische Füllstoff erhöht die spezifische Wärmekapazität eines aus der Putzmasse hergestellten Unterputzes. Das heißt, dass der Unterputz besser als ein herkömmlicher Unterputz in der Lage ist, Wärme zu speichern. Die Wärmespeicherkapazität steigt dabei mit zunehmendem Wassergehalt. Die im Unterputz gespeicherte Wärme wirkt einer zu starken Auskühlung und damit einer Taupunktunterschreitung entgegen. In der Folge sinkt die Gefahr, dass sich Tauwasser an der Oberfläche niederschlägt und einen Nährboden für Mikroorganismen bildet.

Die spezifische Wärmekapazität c eines Stoffs wird durch folgende Gleichung definiert:

$$c = \Delta Q/(m^* \Delta T),$$

wobei $\Delta Q$ die dem Stoff zugeführte bzw. entzogene Wärme, m die Masse des Stoffs und $\Delta T$ die Temperaturdifferenz ist. Formt man die Gleichung um, so dass gilt:

$$c^*m^* \Delta T = \Delta Q,$$

erkennt man, dass bei einem vorgegebenen Wärmeeintrag ($\Delta Q$) der Temperaturanstieg verringert werden kann, wenn der Stoff eine hohe spezifische Wärmekapazität (c) und/oder eine große Masse (m) besitzt.

Dies erklärt einen weiteren positiven Effekt, der mit einem aus einer erfindungsgemäßen Putzmasse hergestellten Unterputz erzielbar ist. Denn aufgrund der erhöhten spezifischen Wärmekapazität wirkt der Unterputz einer zu starken Aufheizung der Fassade entgegen. Insbesondere bildet der Unterputz eine thermische Schutzschicht für eine dahinterliegende Wärmedämmschicht aus. Das heißt, dass sich die Wärmedämmschicht, auf welcher der Unterputz aufgebracht ist, weniger stark erwärmt. Dies ist insbesondere von Vorteil, wenn die Wärmedämmschicht Wärmedämmelemente aus einem thermoplastischen Polymerschaum umfasst, da diese bei starker Erwärmung dazu neigen sich zu verformen oder sogar zu schmelzen.

Die vorstehend genannten Vorteile werden durch die erhöhte spezifische Wärmekapazität des Unterputzes erzielt. Diese ist wiederum darauf zurückzuführen, dass in der zur Herstellung des Unterputzes verwendeten Putzmasse mindestens ein wasserhaltiger und/oder hydratischer Füllstoff enthalten ist.

Unter "wasserhaltigen und/oder hydratischen Füllstoffen" im Sinne der Erfindung werden vorliegend solche Füllstoffe verstanden, die Wasser oder wasserähnliche Moleküle oder Ionen, beispielsweise Hydroxid-Ionen ($OH^-$) oder Hydroxonium-Ionen ($H_3O^+$), enthalten. Der Wasser-/Hydrat-Gehalt eines Füllstoffs kann wie folgt berechnet werden:

$$\frac{\text{Summe der Molgewichte des enthaltenen Wassers und/oder Hydrats}}{\text{Molmasse des wasserhaltigen /hydratischen Füllstoffs}} \times 100\%$$

Für Ettringit ($Ca_6Al_2[(OH)_{12}(SO_4)_3]26H_sO$) mit einer Molmasse von 1254,6 g/mol ergibt sich beispielhaft folgender Wasser-/Hydrat-Gehalt:

$$\frac{12 \times 17 \text{ g/mol} + 26 \times 18 \text{ g/mol}}{1254,6 \text{ g/mol}} \times 100\% = \frac{204 \text{ g/mol} + 468 \text{ g/mol}}{1254,6 \text{ g/mol}} \times 100\% = 53,6\%$$

Das neben dem wasserhaltigen und/oder hydratischen Füllstoff ferner enthaltene wärmeleitende Additiv hat die Aufgabe, die Wärme den wasserhaltigen und/oder hydratischen Füllstoffen zuzuleiten. Auf diese Weise wird die Wärmeaufnahmefähigkeit des Unterputzes weiter verbessert.

Die Wärmeaufnahme erfolgt vorzugsweise tagsüber, wenn die Fassade, auf welcher der Unterputz aufgebracht ist, der Sonneneinstrahlung ausgesetzt ist. Das mindestens eine enthaltene wärmeleitende Additiv absorbiert die im Sonnenlicht enthaltene Wärmestrahlung und leitet sie an den mindestens einen wasserhaltigen und/oder hydratischen Füllstoff weiter, in dem dann die Wärme gespeichert wird. Nachts, in der Abkühlungsphase, läuft der Prozess umgekehrt ab. Das heißt, dass der als Wärmespeicher dienende wasserhaltige und/oder hydratische Füllstoff die Wärme an das wärmeleitende Additiv abgibt, was zur Folge hat, dass die Oberflächentemperatur des Unterputzes bzw. eines hierauf aufgebrachten Oberputzes ansteigt. Die Gefahr, dass die Oberflächentemperatur unter den Taupunkt fällt ist somit verringert.

Da der Unterputz durch die Wärmedämmschicht vom Untergrund thermisch getrennt ist, besteht keine Gefahr, dass durch das mindestens eine enthaltene wärmeleitende Additiv der Wärmeabfluss vom Gebäudeinneren nach außen gefördert wird. Denn dies würde der eigentlichen Aufgabe des Wärmedämmverbundsystems zuwiderlaufen. Die Wärmedämmeigenschaften der Wärmedämmschicht bleiben unverändert erhalten.

Unter der Wärmeleitfähigkeit eines Materials, das vorliegend als wärmeleitendes Additiv Verwendung findet, wird die mittlere Wärmeleitfähigkeit unter Normalbedingungen verstanden. Sie kann den einschlägigen Nachschlage- und Tabellenwerken, wie beispielsweise dem "CRC Handbook of Chemistry and Physics", entnommen werden.

Gemäß einer bevorzugten Ausführungsform der Erfindung ist bzw. sind in der Putzmasse ein Metallhydroxid, ein Hydrat eines Metallsilikats und/oder eines Metallsalzes, insbesondere eines Metallsulfats, und/oder ein Metalloxid als wasserhaltiger und/oder hydratischer Füllstoff enthalten. Derartige Füllstoffe sind allgemein verfügbar und vergleichsweise kostengünstig, insbesondere im Vergleich mit latentwärmespeichernden Materialien.

In Weiterbildung der Erfindung wird vorgeschlagen, dass Aluminiumhydroxid, Kaolinit, Ettringit, Calciumhydroxid, Magnesiumhydroxid und/oder Titanoxidhydrat als wasserhaltiger und/oder hydratischer Füllstoff enthalten ist bzw. sind. Denn diese Füllstoffe enthalten besonders viel Wasser und/oder Hydrat, so dass sie zur Erhöhung der spezifischen Wärmekapazität des Unterputzes besonders geeignet sind.

Bevorzugt ist das mindestens eine wärmeleitende Additiv ein Pigment, wobei Ruß, Graphit, Blähgraphit und/oder Aluminiumpulver besonders geeignete Pigmente sind. Denn diese Pigmente sind in der Lage, besonders viel Wärmestrahlung zu absorbieren.

Vorteilhafterweise liegt das mindestens eine wärmeleitende Additiv bzw. Pigment in vergleichsweise großen Teilchen vor. Auf diese Weise kann die Wärmeaufnahmefähigkeit weiter gesteigert werden. Bevorzugt wird daher ein wärmeleitendes Additiv bzw. Pigment eingesetzt, das eine mittlere Teilchengröße > 200 $\mu$m, vorzugsweise > 300 $\mu$m, weiterhin vorzugsweise > 400 $\mu$m aufweist.

Die Teilchengröße des ferner enthaltenen wasserhaltigen und/oder hydratischen Füllstoffs ist demgegenüber möglichst klein gewählt, um eine gleichmäßige Verteilung sicherzustellen. Denn je kleiner die Teilchen des wasserhaltigen und/oder hydratischen Füllstoffs sind, desto besser können sie sich um die vergleichsweise großen Teilchen des wärmeleitenden Additivs legen, um eine effiziente Wärmeübertragung zu gewährleisten. Bevorzugt weist der wasserhaltige und/oder Wärmeübertragung zu gewährleisten. Bevorzugt weist der wasserhaltige und/oder hydratische Füllstoff eine mittlere Teilchengröße < 100 $\mu$m, vorzugsweise < 75 $\mu$m, weiterhin vorzugsweise < 50 $\mu$m auf.

Die Teilchen des mindestens einen wärmeleitenden Additivs sollten bevorzugt mindestens doppelt so groß, vorzugsweise mindestens viermal so groß, weiterhin vorzugsweise mindestens sechsmal so groß, wie die Teilchen des mindestens einen wasserhaltigen und/oder hydratischen Füllstoffs sein.

Darüber hinaus wird vorgeschlagen, dass in der erfindungsgemäßen Putzmasse zusätzlich zu dem mindestens einen wasserhaltigen und/oder hydratischen Füllstoff weitere Füllstoffe enthalten sind. Hierbei kann es sich insbesondere um herkömmliche Füllstoffe, wie beispielsweise Silizium-Aluminium-Mischoxide, Carbonate, Siliziumdioxide, Silikate und/oder Sulfate handeln. Durch Zugabe derartiger Füllstoffe können die Kosten weiterhin niedrig gehalten werden.

Des Weiteren bevorzugt sind in der Putzmasse zusätzlich zu dem mindestens einen wärmeleitenden Additiv weitere Additive, insbesondere Rheologie-Additive, Hydrophobierungsmittel, Entschäumer, Filmbildehilfsmittel, Dispergiermittel, Konservierungsmittel und/oder Fasern, enthalten. Über die weiteren Additive können die Verarbeitungseigenschaften der Putzmasse positiv beeinflusst werden.

Erfindungsgemäß sind in einer erfindungsgemäßen Putzmasse - jeweils bezogen auf das Gesamtgewicht der verarbeitungsfertigen Putzmasse - enthalten:

1 bis 25 Gew.-% Bindemittel,
2 bis 25 Gew.-% mindestens eines wasserhaltigen und/oder hydratischen Füllstoffs,
2 bis 15 Gew.-% mindestens eines wärmeleitenden Additivs,
40 bis 80 Gew.-% weitere Füllstoffe,
0 bis 10 Gew.-% weitere Additive und

Idealerweise sind, bezogen auf den jeweiligen Gewichtsanteil, mehr wasserhaltige und/oder hydratische Füllstoffe als wärmeleitende Additive in der Putzmasse enthalten. Bevorzugt beträgt der Gewichtsanteil der wasserhaltigen und/oder hydratischen Füllstoffe das Doppelte, vorzugsweise das Dreifache des Gewichtsanteils der wärmeleitenden Additive.

Die enthaltenen Bindemittel können organische und/oder anorganische Bindemittel umfassen. Als organische Bindemittel können insbesondere Homopolymere, Copolymere oder Terpolymere von Acrylsäure und/oder Methacrylsäure, Itaconsäure sowie Säurestern wie Ethylacrylat, Butylacrylat; Styrol, substituiertes oder unsubstituiertes Vinylchlorid, Vinylacetat, Ethylenvinylacetat, Acrylamide und Acrylonitril; wasserverdünnbare Alkydpolymere, Kombinationen von (Meth)Acryl/Alkyd-polymeren, Polyvinylalkohol sowie deren Mischungen eingesetzt werden. Acrylat-Dispersionen und ethylenhaltige Bindemittel werden bevorzugt, da diese Bindemittel eine höhere spezifische Wärmekapazität als andere herkömmliche Polymerbindemittel aufweisen.

Als anorganische Bindemittel können insbesondere zementöse, hydraulisch abbindende Bindemittel, wie beispielsweise Portlandzement, Calciumaluminatzement, Calciumsulfoaluminatzement und/oder Kalkhydrate eingesetzt werden. Denn diese bilden beim Abbinden "wasserhaltige" Stoffe aus und fördern somit eine hohe spezifische Wärmekapazität eines aus der erfindungsgemäßen Putzmasse hergestellten Unterputzes. Beim Abbinden entstehen bzw. entsteht zum Beispiel Calcium-Silikat-Hydrate und Calciumhydroxid oder andere Calcium-Aluminium-Hydrate oder Ettringit (mit 26 Wassermolekülen und 12 Hydroxid-Ionen).

Zur Lösung der eingangs genannten Aufgabe wird ferner ein Wärmedämmverbundsystem vorgeschlagen, das eine Wärmedämmschicht, einen ein- oder mehrlagigen Unterputz sowie einen den Unterputz vollständig abdeckenden Oberputz umfasst. Der Unterputz ist dabei aus einer erfindungsgemäßen Putzmasse hergestellt worden. Der Unterputz weist somit eine erhöhte spezifische Wärmekapazität auf, die- insbesondere nachts, wenn die Außentemperatur stark abfällt - einer Oberflächentemperatur unterhalb des Taupunkts entgegenwirken soll. Auf diese Weise wird die Gefahr eines Tauwasserausfalls minimiert und damit auch die Gefahr, dass die Oberfläche des Oberputzes von Mikroorganismen besiedelt wird. Ferner wirkt der Unterputz einer zu starken Aufheizung der Wärmedämmschicht entgegen, so dass die Gefahr thermisch bedingter Verformungen der Wärmedämmelemente, aus denen die Wärmedämmschicht gebildet ist, verringert wird.

Die wärmespeichernden Eigenschaften des Unterputzes werden durch den Oberputz, der den Unterputz vollständig abdeckt, nicht beeinträchtigt. Das Gegenteil ist der Fall, da die Oberputzschicht der Abstrahlung von Wärmeenergie entgegenwirkt. Dies gilt insbesondere, wenn der Unterputz neben wasserhaltigen und/oder hydratischen Füllstoffen wärmeleitende Additive enthält, die Wärmestrahlung nicht nur sehr schnell aufnehmen, sondern entsprechend schnell auch wieder abgeben.

Da Wärmestrahlung, insbesondere IR-Strahlung, absorbierende, wärmeleitende Additive in der Regel dunkel sind, führt die Zugabe derartiger Additive zu einer dunklen Einfärbung des Unterputzes. Durch den hierauf aufgebrachten Oberputz, der vorzugsweise frei von derartigen Additiven ist, kann die Oberfläche farblich beliebig gestaltet werden. Alternativ oder ergänzend kann auf den Oberputz eine Farbe, insbesondere eine Fassadenfarbe, als Endbeschichtung aufgebracht werden.

Der aus einer erfindungsgemäßen Putzmasse hergestellte ein- oder mehrlagige Unterputz muss nicht zwingend unmittelbar auf der Wärmedämmschicht eines Wärmedämmverbundsystems angeordnet sein. Beispielsweise kann zwischen dem ein- oder mehrlagigen Unterputz und der Wärmedämmschicht auch mindestens eine weitere Putzschicht angeordnet sein. Hierbei kann es sich insbesondere um eine "Altputzschicht" handeln, die es zu renovieren gilt. Auf die Altputzschicht folgt dementsprechend ein neuer Putzaufbau, der einen ein- oder mehrlagigen Unterputz aus einer erfindungsgemäßen Putzmasse sowie einen auf den Unterputz aufgebrachten Oberputz umfasst. Optional kann auf den Oberputz eine Fassadenfarbe als Endbeschichtung aufgetragen werden.

Darüber hinaus kann zwischen der Wärmedämmschicht bzw. der Altputzschicht und dem ein- oder mehrlagigen Unterputz aus einer erfindungsgemäßen Putzmasse eine vermittelnde Zwischenschicht, wie beispielsweise eine Haftbrücke, angeordnet sein.

Der ein- oder mehrlagige Unterputz weist vorzugsweise eine Gesamtstärke von 1 bis 20 mm auf. Das heißt, dass die Gesamtschichtstärke der eines herkömmlichen Unterputzes in einem Wärmedämmverbundsystem entspricht. Denn die hohe spezifische Wärmekapazität des Unterputzes soll durch den mindestens einen wasserhaltigen und/oder hydratischen Füllstoff und nicht durch eine Vergrößerung der Masse des Unterputzes bewirkt werden. Dies wäre unwirtschaftlich.

Je nach Zusammensetzung der Putzmasse kann die Gesamtschichtstärke des Unterputzes variieren. Insbesondere gilt es hinsichtlich des enthaltenen Bindemittels zu differenzieren. Für zementöse Unterputze beträgt die maximale Gesamtschichtstärke bevorzugt 20 mm, vorzugsweise 15 mm und weiterhin vorzugsweise 10 mm. Für Polymergebundene Unterputze beträgt die maximale Gesamtschichtstärke bevorzugt 10 mm, vorzugsweise 7 mm und weiterhin vorzugsweise 5 mm, um ein vollständiges Durchtrocknen des Unterputzes zu ermöglichen.

Die Schichtstärke des Oberputzes beträgt vorzugsweise 0,5 bis 20 mm und entspricht somit der Schichtstärke eines herkömmlichen Oberputzes in einem Wärmedämmverbundsystem.

Ein mineralischer Oberputzes weist bevorzugt eine maximale Schichtstärke von 20 mm, vorzugsweise von 15 mm, weiterhin vorzugsweise von 10 mm auf. Ein Kunstharz-Oberputz weist demgegenüber eine maximale Schichtstärke bevorzugt von 12 mm, vorzugsweise von 10 mm und weiterhin vorzugsweise von 7 mm auf.

In Weiterbildung der Erfindung wird vorgeschlagen, dass in den Unterputz ein Armierungsgewebe eingelegt ist. Das eingelegte Armierungsgewebe führt zur Ausbildung einer Armierungsschicht, die der Bildung spannungsbedingter Risse entgegenwirkt.

Die Vorteile, die sich aus der Verwendung einer erfindungsgemäßen Putzmasse zur Ausbildung des ein- oder mehrlagigen Unterputzes ergeben, kommen insbesondere dann zum Tragen, wenn die Wärmedämmschicht mindestens ein Wärmedämmelement aus einem thermoplastischen Polymerschaum umfasst, das an einem bauseitigen Untergrund befestigt ist. Der Unterputz wirkt dann als thermische Schutzschicht, die eine zu starke Aufheizung des thermoplastischen Polymerschaums und damit unerwünschte Verformungen der hieraus ausgebildeten Wärmedämmelemente verhindert. Bei den Polymerschäumen kann es sich beispielsweise um einen Schaum aus Polystyrol (EPS, XPS), aus Phenolharz (PF), aus Polyurethan (PU), aus Polyisocyanurat (PIR) oder einen Schaum aus Polylactid (PLA) handeln. Denn diese neigen bei Überhitzung zu unerwünschten, irreversiblen Verformungen.

Das Wärmedämmelement aus thermoplastischem Polymerschaum ist vorzugsweise mit dem bauseitigen Untergrund verklebt. Über den Kleber können Unebenheiten des Untergrunds ausgeglichen werden. Alternativ oder ergänzend können Dämmstoffdübel zur Befestigung eingesetzt werden.

Des Weiteren wird ein Verfahren zur Herstellung eines Wärmedämmverbundsystems vorgeschlagen, bei dem eine erfindungsgemäße Putzmasse auf eine an einem bauseitigen Untergrund befestigte Wärmedämmschicht oder auf eine Putzschicht, die vorzugsweise bereits auf der Wärmedämmschicht aufgebracht ist, in einer oder in mehreren Lagen zur Ausbildung eines ein- oder mehrlagigen Unterputzes aufgebracht wird.

Bei der Neuherstellung eines Wärmedämmverbundsystems wird zunächst die Wärmedämmschicht ausgebildet. Hierzu werden Wärmedämmelemente, insbesondere Wärmedämmplatten, an einem bauseitigen Untergrund befestigt, vorzugsweise mit dem bauseitigen Untergrund verklebt und/oder gedübelt. Auf die Wärmedämmschicht wird dann ein Putzaufbau aufgebracht, der einen ein- oder mehrlagige Unterputz und einen Oberputz umfasst. Zur Armierung des ein- oder mehrlagigen Unterputzes kann in diesen ein Armierungsgewebe eingelegt werden. Dadurch, dass eine erfindungsgemäße Putzmasse zur Herstellung des ein- oder mehrlagigen Unterputzes verwendet wird, weist dieser eine erhöhte spezifische Wärmekapazität auf, so dass der Unterputz als Wärmespeicher einsetzbar ist. Die erhöhte spezifische Wärmekapazität ist auf die in der Putzmasse enthaltenen wasserhaltigen und/oder hydratischen Füllstoffe zurückzuführen, wobei die ferner enthaltenen wärmeleitenden Additive die Wärmeenergie einfangen und den wasserhaltigen und/oder hydratischen Füllstoffen zuleiten. Die wärmeleitenden Additive unterstützen somit die Wirkung der wasserhaltigen und/oder hydratischen Füllstoffe. Zugleich wirkt der als Wärmespeicher dienende Unterputz einer zu starken Erwärmung der dahinterliegenden Wärmedämmschicht und damit einer thermisch bedingten Verformung der die Wärmedämmschicht ausbildenden Wärmedämmelemente entgegen.

Die Vorteile der erfindungsgemäßen Putzmasse kommen nicht nur bei der Neuherstellung eines Wärmedämmverbundsystems zum Tragen, sondern auch bei der Renovierung bereits bestehender Wärmedämmverbundsysteme. In diesem Fall können der ein- oder mehrlagige Unterputz und der Oberputz direkt auf den bereits bestehenden Putzaufbau aufgebracht werden. Dies hat den Vorteil, dass der bestehende Putzaufbau nicht erst entfernt und entsorgt werden muss.

Eine bevorzugte Zusammensetzung einer erfindungsgemäßen Putzmasse wird nachfolgend anhand eines konkreten Beispiels wiedergegeben:

<div align="center">Beispiel</div>

| | |
|---|---|
| 14,0 Gew.-% | Wasser |
| 12,0 Gew.-% | Wässrige Polymerdispersion (Acrylat-Basis, 50% Feststoffgehalt |
| 12,0 Gew.-% | Carbonatische Füllstoffe (z. B. $CaCO_3$) |
| 5,0 Gew.-% | Silikatische Füllstoffe (z. B. Mg-Silikat) |
| 37,0 Gew.-% | Quarzsande, Quarzmehle |
| 12,0 Gew.-% | Wasserhaltige und/oder hydratische Füllstoffe |
| 4,0 Gew.-% | Wärmeleitende Additive (z. B. Graphite) |
| 4,0 Gew.-% | Weitere Additive |

Anhand einer hieraus hergestellten Putzschicht wurde die Wärmespeicherfähigkeit bestimmt und mit der Wärmespeicherfähigkeit der nachfolgend genannten Beispielsrezepturen verglichen:

<div align="center">Referenzbeispiel 1</div>

| | |
|---|---|
| 14,0 Gew.-% | Wasser |
| 12,0 Gew.-% | Wässrige Polymerdispersion (Acrylat-Basis, 50% Feststoffgehalt) |
| 28,0 Gew.-% | Carbonatische Füllstoffe (z. B. $CaCO_3$) |
| 5,0 Gew.-% | Silikatische Füllstoffe (z. B. Mg-Silikat) |
| 37,0 Gew.-% | Quarzsande, Quarzmehle |
| 0,0 Gew.-% | Wasserhaltige und/oder hydratische Füllstoffe |
| 0,0 Gew.-% | Wärmeleitende Additive |

(fortgesetzt)

| 4,0 Gew.-% | Weitere Additive |
|---|---|

### Referenzbeispiel 2

| 14,0 Gew.-% | Wasser |
|---|---|
| 12,0 Gew.-% | Wässrige Polymerdispersion (Acrylat-Basis, 50% Feststoffgehalt) |
| 16,0 Gew.-% | Carbonatische Füllstoffe (z. B. $CaCO_3$) |
| 5,0 Gew.-% | Silikatische Füllstoffe (z. B. Mg-Silikat) |
| 37,0 Gew.-% | Quarzsande, Quarzmehle |
| 12,0 Gew.-% | Wasserhaltige und/oder hydratische Füllstoffe |
| 0,0 Gew.-% | Wärmeleitende Additive |
| 4,0 Gew.-% | Weitere Additive |

### Referenzbeispiel 3

| 14,0 Gew.-% | Wasser |
|---|---|
| 12,0 Gew.-% | Wässrige Polymerdispersion (Acrylat-Basis, 50% Feststoffgehalt) |
| 24,0 Gew.-% | Carbonatische Füllstoffe (z. B. $CaCO_3$) |
| 5,0 Gew.-% | Silikatische Füllstoffe (z. B. Mg-Silikat) |
| 37,0 Gew.-% | Quarzsande, Quarzmehle |
| 0,0 Gew.-% | Wasserhaltige und/oder hydratische Füllstoffe |
| 4,0 Gew.-% | Wärmeleitende Additive |
| 4,0 Gew.-% | Weitere Additive |

Zunächst wurden Prüfkörper mit folgendem Aufbau hergestellt:
Auf einer Beton-Gehwegplatte der Abmessungen 50 cm x 50 cm wurde eine 8 cm starke Wärmedämmplatte aus expandiertem Polystyrol nach EN 13163 mit Nennwert der Wärmeleitfähigkeit $\lambda_D$: 0,031 W/(m*K) vollflächig mit mineralischem Kleber befestigt. Darauf wurde ein Unterputz aus einer der vorstehend genannten Putzmassen (Beispiel, Referenzbeispiele 1 bis 3) in einer Schichtstärke von 5 mm aufgebracht. Als Oberputz wurde ein handelsüblicher, organisch gebundener Kunstharzputz in einer Schichtstärke von 3 mm aufgetragen.

Die Prüfkörper wurden anschließend in 90°-Südausrichtung in Süddeutschland aufgestellt.

Zur Taupunktbestimmung wurden die Oberflächentemperaturen der Prüfkörper mittels eines Kontaktsensors gemessen. Ferner wurden die Lufttemperatur und die Luftfeuchtigkeit der Umgebung als meteorologische Parameter erfasst. Über die temperaturabhängige Wasserdampfaufnahmefunktion von Luft und deren Grenzfunktion in Form der Wasserdampfsättigungskurve sowie der tatsächlichen Oberflächentemperatur des Prüfkörpers wurde der Taupunkt bzw. die Taupunktunterschreitung berechnet. Aus den genannten Eingangskenngrößen, die während des Versuchszeitraums von vier Wochen (im September und Oktober 2015, wobei Tage mit Niederschlagsereignissen ausgenommen wurden) kontinuierlich aufgezeichnet wurden, konnten die Betauungszeiträume bestimmt werden. Die Dauer der Taupunktunterschreitung (betaute Zeit) wurde anschließend ins Verhältnis zur Gesamtzeit gesetzt:

(betaute Zeit [h] / Gesamtzeit [h]) x 100 [%]

| | |
|---|---|
| Beispiel | 22 |
| Referenzbeispiel 1 | 33 |
| Referenzbeispiel 2 | 31 |
| Referenzbeispiel 3 | 29 |

Die Gegenüberstellung zeigt, dass die Verwendung einer erfindungsgemäßen Putzmasse zu einer Verkürzung des Betauungszeitraums führt. Das heißt, dass zwar eine Taupunktunterschreitung nicht vollständig verhindert werden konnte, der Zeitraum der Betauung jedoch deutlich verkürzt werden konnte. Dadurch verringert sich die Gefahr, dass die Oberfläche von Mikroorganismen besiedelt wird.

Ferner zeigt die Gegenüberstellung, dass wasserhaltige und/oder hydratische Füllstoffe nur in Kombination mit wärmeleitenden Additiven zu dem gewünschten Ergebnis führen. Sofern nur wasserhaltige und/oder hydratische Füllstoffe ohne wärmeleitende Additive (Referenzbeispiel 2) oder nur wärmeleitende Additive ohne wasserhaltige und/oder hydratische Füllstoffe (Referenzbeispiel 3) eingesetzt werden, man nicht zu einem befriedigenden Ergebnis gelangt.

**Patentansprüche**

1. Putzmasse zur Ausbildung eines ein- oder mehrlagigen Unterputzes in einem Wärmedämmverbundsystem, umfassend ein organisches und/oder anorganisches Bindemittel, einen Füllstoff und ein Additiv, wobei

| | |
|---|---|
| 1 bis 25 Gew.-% | Bindemittel, |
| 2 bis 25 Gew.-% | mindestens eines wasserhaltigen und/oder hydratischen Füllstoffs, der mindestens 30 Gew.-%, vorzugsweise mindestens 40 Gew.-%, weiterhin vorzugsweise mindestens 50 Gew.-% Wasser und/oder Hydrat bezogen auf das Gesamtgewicht des Füllstoffs enthält, |
| 2 bis 15 Gew.-% | mindestens eines wärmeleitenden Additivs aus einem Material mit einer Wärmeleitfähigkeit $\lambda > 40$ W/(m*K), vorzugsweise $\lambda > 60$ W/(m*K), weiterhin vorzugsweise $\lambda > 80$ W/(m*K), |
| 40 bis 80 Gew.-% | weitere Füllstoffe, |
| 0 bis 10 Gew.-% | weitere Additive und |
| 10 bis 40 Gew.-% | Wasser |

jeweils bezogen auf das Gesamtgewicht der verarbeitungsfertigen Putzmasse enthalten sind.

2. Putzmasse nach Anspruch 1,
**dadurch gekennzeichnet, dass** ein Metallhydroxid, ein Hydrat eines Metallsilikats und/oder eines Metallsalzes, insbesondere eines Metallsulfats, und/oder ein Metalloxid, als wasserhaltiger und/oder hydratischer Füllstoff enthalten ist bzw. sind.

3. Putzmasse nach Anspruch 1 oder 2,
**dadurch gekennzeichnet, dass** Aluminiumhydroxid, Kaolinit, Ettringit, Calciumhydroxid, Magnesiumhydroxid und/oder Titanoxidhydrat als wasserhaltiger und/oder hydratischer Füllstoff enthalten ist bzw. sind.

4. Putzmasse nach einem der vorhergehenden Ansprüche,
**dadurch gekennzeichnet, dass** das mindestens eine wärmeleitende Additiv ein Pigment, insbesondere Ruß, Graphit, Blähgraphit und/oder Aluminiumpulver, ist.

5. Putzmasse nach einem der vorhergehenden Ansprüche,
**dadurch gekennzeichnet, dass** das mindestens eine wärmeleitende Additiv, vorzugsweise Pigment, eine mittlere Teilchengröße $> 200$ μm, vorzugsweise $> 300$ μm, weiterhin vorzugsweise $> 400$ μm aufweist.

6. Putzmasse nach einem der vorhergehenden Ansprüche,
**dadurch gekennzeichnet, dass** der mindestens eine wasserhaltige und/oder hydratische Füllstoff eine mittlere Teilchengröße $< 100$ μm, vorzugsweise $< 75$ μm, weiterhin vorzugsweise $< 50$ μm aufweist.

7. Putzmasse nach einem der vorhergehenden Ansprüche,
**dadurch gekennzeichnet, dass** zusätzlich zu dem mindestens einen wasserhaltigen und/oder hydratischen Füllstoff weitere Füllstoffe, insbesondere Silizium-Aluminium-Mischoxide, Carbonate, Siliziumdioxide, Silikate und/oder Sulfate, enthalten sind.

8. Putzmasse nach einem der vorhergehenden Ansprüche,
**dadurch gekennzeichnet, dass** zusätzlich zu dem mindestens einen wärmeleitenden Additiv weitere Additive, insbesondere Rheologie-Additive, Hydrophobierungsmittel, Entschäumer, Filmbildehilfsmittel, Dispergiermittel, Konservierungsmittel und/oder Fasern, enthalten sind.

**9.** Wärmedämmverbundsystem, umfassend eine Wärmedämmschicht, einen ein- oder mehrlagigen Unterputz, der aus einer Putzmasse nach einem der Ansprüche 1 bis 8 hergestellt worden ist, sowie einen Oberputz, der den Unterputz vollflächig abdeckt.

**10.** Wärmedämmverbundsystem nach Anspruch 9,
**dadurch gekennzeichnet, dass** zwischen dem ein- oder mehrlagigen Unterputz und der Wärmedämmschicht mindestens eine weitere Putzschicht angeordnet ist.

**11.** Wärmedämmverbundsystem nach Anspruch 9 oder 10,
**dadurch gekennzeichnet, dass** der ein- oder mehrlagige Unterputz eine Gesamtstärke von 1 bis 20 mm aufweist und/oder in den Unterputz ein Armierungsgewebe eingelegt ist.

**12.** Wärmedämmverbundsystem nach einem der Ansprüche 9 bis 11,
**dadurch gekennzeichnet, dass** die Wärmedämmschicht mindestens ein Wärmedämmelement aus einem thermoplastischen Polymerschaum umfasst, das an einem bauseitigen Untergrund befestigt, vorzugsweise mit dem bauseitigen Untergrund verklebt ist.

**13.** Verfahren zur Herstellung eines Wärmedämmverbundsystems, bei dem eine Putzmasse nach einem der Ansprüche 1 bis 8 auf eine an einem bauseitigen Untergrund befestigte Wärmedämmschicht oder auf eine Putzschicht in einer oder in mehreren Lagen zur Ausbildung eines ein- oder mehrlagigen Unterputzes aufgebracht wird.

**Claims**

**1.** A plaster mass for constructing a single- or multi-layered render in a thermal insulation system, comprising an organic and/or inorganic binder, a filler and an additive, which contains

   1% to 25% by weight of binder,
   2% to 25% by weight of at least one hydrated and/or hydrous filler which contains at least 30% by weight, preferably at least 40% by weight, more preferably at least 50% by weight of water and/or hydrate with respect to the total weight of the filler;
   2% to 15% by weight of at least one thermally conductive additive formed from a material with a thermal conductivity $\lambda > 40$ W/(m*K), preferably $\lambda > 60$ W/(m*K), more preferably $\lambda > 80$ W/(m*K),
   40% to 80% by weight of further fillers,
   0 to 10% by weight of further additives, and
   10% to 40% by weight of water,

respectively with respect to the total weight of the ready-to-use plaster mass.

**2.** The plaster mass as claimed in claim 1,
**characterized in that** it contains a metal hydroxide, a hydrate of a metal silicate and/or of a metal salt, in particular of a metal sulphate, and/or a metal oxide, as the hydrated and/or hydrous filler.

**3.** The plaster mass as claimed in claim 1 or claim 2,
**characterized in that** it contains aluminium hydroxide, kaolinite, ettringite, calcium hydroxide, magnesium hydroxide and/or titanium oxide hydrate as the hydrated and/or hydrous filler.

**4.** The plaster mass as claimed in one of the preceding claims,
**characterized in that** the at least one thermally conductive additive is a pigment, in particular carbon black, graphite, expandable graphite and/or aluminium powder.

**5.** The plaster mass as claimed in one of the preceding claims,
**characterized in that** the at least one thermally conductive additive, preferably pigment, has a mean particle size of $> 200$ $\mu$m, preferably $> 300$ $\mu$m, more preferably $> 400$ $\mu$m.

**6.** The plaster mass as claimed in one of the preceding claims,
**characterized in that** the at least one hydrated and/or hydrous filler has a mean particle size of $< 100$ $\mu$m, preferably $< 75$ $\mu$m, more preferably $< 50$ $\mu$m.

**7.** The plaster mass as claimed in one of the preceding claims,
**characterized in that** it contains further fillers, in particular silicon-aluminium mixed oxides, carbonates, silicon dioxides, silicates and/or sulphates in addition to the at least one hydrated and/or hydrous filler.

**8.** The plaster mass as claimed in one of the preceding claims,
**characterized in that** it contains further additives, in particular rheology additives, water repellent agents, defoaming agents, film-forming agents, dispersing agents, preservatives and/or fibres, in addition to the at least one thermally conductive additive.

**9.** A thermal insulation system comprising a thermal insulation layer, a single- or multi-layered render which has been produced from a plaster mass as claimed in one of claims 1 to 8, as well as a finishing plaster which completely covers the render.

**10.** The thermal insulation system as claimed in claim 9,
**characterized in that** at least one further layer of plaster is disposed between the single- or multi-layered render and the thermal insulation layer.

**11.** The thermal insulation system as claimed in claim 9 or claim 10,
**characterized in that** the single- or multi-layered render has a total thickness of 1 to 20 mm and/or a reinforcing fabric is inserted into the render.

**12.** The thermal insulation system as claimed in one of claims 9 to 11,
**characterized in that** the thermal insulation layer comprises at least one thermal insulation element formed from a thermoplastic polymer foam which is attached to a construction-side substrate, preferably bonded to the construction-side substrate.

**13.** A method for producing a thermal insulation system, in which a plaster mass as claimed in one of claims 1 to 8 is applied to a thermal insulation layer attached to a construction-side substrate or to a layer of plaster in one or more layers in order to construct a single- or multi-layered render.

**Revendications**

**1.** Crépi, destiné à créer un sous-enduit monocouche ou multicouches dans un système d'isolation thermique composite, comprenant un agent liant organique et/ou inorganique, un agent de charge et un additif,

de 1 à 25 % en poids d'agent liant,
de 2 à 25 % en poids d'au moins un agent de charge aqueux et/ou hydraté qui contient au moins 30 % en poids, de préférence au moins 40 % en poids, de préférence par ailleurs au moins 50 % en poids d'eau et/ou d'hydrate, rapportés au poids total de l'agent de charge,
de 2 à 15 % en poids d'au moins un additif thermoconducteur en une matière présentant une conductivité thermique $\lambda > 40$ W/(m*K), de préférence $\lambda > 60$ W/(m*K), de préférence par ailleurs $\lambda > 80$ W/(m*K),
de 40 à 80 % en poids d'autres agents de charge,
de 0 à 10 % en poids d'autres additifs et
de 10 bis 40 % en poids d'eau

rapportés respectivement au poids total du crépi prêt à la mise en oeuvre étant contenus.

**2.** Crépi selon la revendication 1,
**caractérisé en ce qu'**un hydroxyde métallique, un hydrate d'un silicate métallique et/ou d'un sel métallique, notamment d'un sulfate métallique, et/ou un oxyde métallique est ou sont contenu (s) en tant qu'agent de charge aqueux et/ou hydraté.

**3.** Crépi selon la revendication 1 ou 2,
**caractérisé en ce que** de l'hydroxyde d'aluminium, de la kaolinite, de l'ettringite, de l'hydroxyde de calcium, de l'hydroxyde de magnésium et/ou de l'oxyde de titane hydraté est ou sont contenu(s) en tant qu'agent de charge aqueux et/ou hydraté.

**4.** Crépi selon l'une quelconque des revendications précédentes,
**caractérisé en ce que** l'au moins un additif thermoconducteur est un pigment, notamment du noir de carbone, du graphite, du graphite expansé et/ou de la poudre d'aluminium.

**5.** Crépi selon l'une quelconque des revendications précédentes,
**caractérisé en ce que** l'au moins un additif thermoconducteur de préférence un pigment présente une taille moyenne de particules > 200 μm, de préférence > 300 μm, de préférence par ailleurs, > 400 μm.

**6.** Crépi selon l'une quelconque des revendications précédentes,
**caractérisé en ce que** l'au moins un agent de charge aqueux et/ou hydraté présente une taille moyenne de particules < 100 μm, de préférence,
< 75 μm, de préférence, par ailleurs < 50 μm.

**7.** Crépi selon l'une quelconque des revendications précédentes,
**caractérisé en ce qu'**additionnellement à l'au moins un agent de charge aqueux et/ou hydraté sont contenus d'autres agents de charge, notamment des oxydes mixtes de silicium/d'aluminium, des carbonates, des dioxydes de silicium, des silicates et/ou des sulfates.

**8.** Crépi selon l'une quelconque des revendications précédentes,
**caractérisé en ce qu'**additionnellement à l'au moins un additif thermoconducteur sont contenus d'autres additifs, notamment des additifs rhéologiques, des agents conférant le caractère hydrophobe, des agents anti-mousses, des agents filmogènes, des agents dispersants, des conservateurs et/ou des fibres.

**9.** Système d'isolation thermique composite, comprenant une couche isolante thermique, un sous-enduit monocouche ou multicouches, qui a été fabriqué à partir d'un crépi selon l'une quelconque des revendications 1 à 8, ainsi qu'un enduit de finition, qui recouvre à pleine surface le sous-enduit.

**10.** Système d'isolation thermique composite selon la revendication 9,
**caractérisé en ce qu'**entre le sous-enduit monocouche ou multicouches et la couche isolante thermique est placée au moins une autre couche de crépi.

**11.** Système d'isolation thermique composite selon la revendication 9 ou 10,
**caractérisé en ce que** le sous-enduit monocouche ou multicouches présente une épaisseur totale de 1 à 20 mm et/ou **en ce que** dans le sous-enduit est inséré un tissu d'armature.

**12.** Système d'isolation thermique composite selon l'une quelconque des revendications 9 à 11,
**caractérisé en ce que** la couche isolante thermique comprend au moins un élément isolant thermique en une mousse polymère thermoplastique, qui est fixé sur un support inhérent au bâtiment, de préférence collé sur un support inhérent au bâtiment.

**13.** Procédé, destiné à fabriquer un système d'isolation thermique composite, lors duquel on applique un crépi selon l'une quelconque des revendications 1 à 8 sur une couche isolante thermique fixée sur un support inhérent au bâtiment ou sur une couche de crépi, en une ou en plusieurs couches, pour créer un sous-crépi monocouche ou multicouches.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0652187 A1
- EP 0417418 A1
- EP 2696006 A2
- EP 2883918 A1
- DE 10212580 A1